# EUROPÄISCHE PATENTSCHRIFT

(11) **EP 3 428 888 B1**
(45) Veröffentlichungstag und Bekanntmachung des Hinweises auf die Patenterteilung: **08.12.2021**
(21) Anmeldenummer: 18177150.2
(22) Anmeldetag: 12.06.2018
(51) Int. Cl.: G07C 9/00, G06K 9/00

(54) **ZUTRITTSKONTROLLVORRICHTUNG**
ACCESS CONTROL DEVICE
DISPOSITIF DE CONTRÔLE D'ACCÈS

(30) Priorität: 12.07.2017 DE 102017115669
(43) Veröffentlichungstag der Anmeldung: 16.01.2019
(73) Patentinhaber: Bundesdruckerei GmbH, 10969 Berlin (DE)
(72) Erfinder: MORGNER, Frank, 15537 Grünheide (DE); BASTIAN, Paul, 10243 Berlin (DE); Dr. SCHNJAKIN, Maxim, 10245 Berlin (DE)
(74) Vertreter: Patentship Patentanwaltsgesellschaft mbH

(56) Entgegenhaltungen:
- WO-A1-2017/033186
- DE-A1- 10 230 446
- US-A1- 2014 049 361
- US-A1- 2018 083 783

## Beschreibung

Die vorliegende Erfindung betrifft das Gebiet der Zutrittskontrolle eines Nutzers zu einem Zutrittsbereich.

Die Offenlegungsschrift US 2014/049361 A1 offenbart ein Zutrittskontrollsystem.

Die Offenlegungsschrift WO 2017/033186 A1 offenbart ein System und ein Verfahren zum Identifizieren einer Person.

Die Offenlegungsschrift DE 102 30 446 A1 offenbart ein Verfahren zur biometrischen Zugangskontrolle.

Zutrittskontrollsysteme verwenden üblicherweise rein Besitz-basierte Hardware-Token zur Zutrittskontrolle von Nutzern. Ferner werden zur Zutrittskontrolle als weitere Faktoren beispielsweise persönliche Identifikationsnummern (PINs) oder biometrische Merkmale der Nutzer, wie beispielsweise Fingerabdrücke oder Gesichtsbilder, ausgewertet.

Derartige Ansätze erfordern üblicherweise Zutrittskontrollsysteme mit ortsfest installierten Einrichtungen zur Verifikation von Hardware-Token oder zur Erfassung biometrischer Merkmale. Aufgrund der hohen Verbreitung von Smartphones sowohl im privaten Bereich als auch im geschäftlichen Bereich ist der Einsatz dieser mobilen Kommunikationsgeräte zur Zutrittskontrolle daher wünschenswert.

Es ist daher eine Aufgabe der vorliegenden Erfindung, ein effizientes Konzept zur Zutrittskontrolle eines Nutzers zu einem Zutrittsbereich zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis und schließt diese mit ein, dass die obige Aufgabe durch ein mobiles Kommunikationsgerät gelöst werden kann, welches eine Bewegung des mobilen Kommunikationsgerätes erfasst und hieraus ein Bewegungsprofil ableitet, welches an eine Zutrittskontrollvorrichtung übertragen werden kann. Als Bewegungsprofil wird hier insbesondere eine datentechnische Darstellung von Bewegungsmustern des Nutzers bzw.

Inhabers des mobilen Kommunikationsgerätes im Alltag oder bei Verwendung des mobilen Kommunikationsgerätes angesehen, vorzugsweise in datentechnisch reduzierter Form. Die Zutrittskontrollvorrichtung kann das Bewegungsprofil mit einem vorbestimmten Bewegungsprofil vergleichen, und in Abhängigkeit von einem Ähnlichkeitsmaß zwischen dem Bewegungsprofil und dem vorbestimmten Bewegungsprofil einen Zutritt zu einem Zutrittsbereich gewähren oder verweigern. Das vorbestimmte Bewegungsprofil kann beispielsweise ein für die zu authentifizierende Person typischer Datensatz der oben für das Bewegungsprofil allgemein definierten Art sein, und beispielsweise eine für die Person bzw. den Nutzer typische Art der Ausführung einer vorab festgelegten Geste oder ein Laufmuster der Person bzw. des Nutzers beschreiben. Da jeder Mensch aufgrund unabänderlicher körperlicher Eigenschaften, wie beispielsweise Längen und Längenverhältnissen von Gliedmaßen, Bewegungen in einer den jeweiligen Menschen charakterisierenden Form ausführt, kann eine auf durch das mobile Kommunikationsgerät erfassten Bewegungen basierende Identifikation des Nutzers zur Zutrittskontrolle verwendet werden. Hierbei spricht man typischerweise von verhaltensbasierter Identifikation (engl. behaviour-based identification). Durch den Vergleich des Bewegungsprofils mit dem vorbestimmten Bewegungsprofil sowie die Bestimmung des Ähnlichkeitsmaßes durch die Zutrittskontrollvorrichtung kann insbesondere ein mobiles Kommunikationsgerät verwendet werden, zu welchem keine uneingeschränkte Vertrauensbeziehung besteht.

Gemäß einem ersten nicht erfindungsgemäßen Aspekt betrifft die Erfindung ein mobiles Kommunikationsgerät zum Kommunizieren mit einer Zutrittskontrollvorrichtung. Das mobile Kommunikationsgerät umfasst einen Bewegungssensor, welcher ausgebildet ist, eine Bewegung des mobilen Kommunikationsgerätes zu erfassen, einen Prozessor, welcher ausgebildet ist, aus der erfassten Bewegung des mobilen Kommunikationsgerätes ein Bewegungsprofil abzuleiten, wobei das Bewegungsprofil die erfasste Bewegung des mobilen Kommunikationsgerätes anzeigt, und eine Kommunikationsschnittstelle, welche ausgebildet ist, das Bewegungsprofil an die Zutrittskontrollvorrichtung auszusenden.

Gemäß einer nicht erfindungsgemäßen Ausführungsform repräsentiert die erfasste Bewegung des mobilen Kommunikationsgerätes einen zeitlichen Verlauf einer Position des mobilen Kommunikationsgerätes, einer Geschwindigkeit des mobilen Kommunikationsgerätes, einer Beschleunigung des mobilen Kommunikationsgerätes, einer Orientierung des mobilen Kommunikationsgerätes, einer Winkelgeschwindigkeit des mobilen Kommunikationsgerätes, oder einer Winkelbeschleunigung des mobilen Kommunikationsgerätes. Dadurch wird der Vorteil erreicht, dass verschiedenste Gesten, welche der Nutzer mit dem mobilen Kommunikationsgerät durchführt, erfasst werden können.

Gemäß einer nicht erfindungsgemäßen Ausführungsform repräsentiert das Bewegungsprofil eine datentechnische Reduktion der erfassten Bewegung des mobilen Kommunikationsgerätes, insbesondere ein Histogramm, eine Wahrscheinlichkeitsverteilung oder ein Differenzsignal der erfassten Bewegung gegenüber einer vorgespeicherten Referenzbewegung. Das Bewegungsprofil kann ferner Sensordaten oder eine Kopie zumindest eines Teils der Sensordaten des Bewegungssensors umfassen. Dadurch wird der Vorteil erreicht, dass das Bewegungsprofil effizient mit dem vorbestimmten Bewegungsprofil verglichen werden kann.

Gemäß einer nicht erfindungsgemäßen Ausführungsform ist die Kommunikationsschnittstelle ausgebildet, mit der Zutrittskontrollvorrichtung ein asymmetrisches Authentifizierungsprotokoll durchzuführen, und wobei die Kommunikationsschnittstelle ausgebildet ist, das Bewegungsprofil an die Zutrittskontrollvorrichtung auszusenden, falls das mobile Kommunikationsgerät oder die Zutrittskontrollvorrichtung mittels des asymmetrischen Authentifizierungsprotokolls authentifiziert ist. Dadurch wird der Vorteil erreicht, dass die Schlüsselverwaltung vereinfacht und zugleich ein hohes Authentifizierungsniveau gewährleistet werden kann.

Gemäß einer nicht erfindungsgemäßen Ausführungsform ist dem mobilen Kommunikationsgerät ein erstes kryptographisches Zertifikat zugeordnet, wobei der Zutrittskontrollvorrichtung ein zweites kryptographisches Zertifikat zugeordnet ist, und wobei die Kommunikationsschnittstelle ausgebildet ist, das asymmetrische Authentifizierungsprotokoll unter Verwendung des ersten kryptographischen Zertifikats und des zweiten kryptographischen Zertifikats durchzuführen. Dadurch wird der Vorteil erreicht, dass das asymmetrische Authentifizierungsprotokoll effizient durchgeführt werden kann.

Gemäß einer nicht erfindungsgemäßen Ausführungsform umfasst das asymmetrische Authentifizierungsprotokoll ein Extended-Access-Control (EAC) Authentifizierungsprotokoll. Das Extended-Access-Control (EAC) Authentifizierungsprotokoll kann einen Protokollabschnitt zur Terminal Authentication (TA), einen Protokollabschnitt zur Passive Authentication (PA) und einen Protokollabschnitt zur Chip Authentication (CA) umfassen. Ferner kann im Rahmen des Extended-Access-Control (EAC) Authentifizierungsprotokolls ein Secure Messaging (SM) Kanal zwischen der Zutrittskontrollvorrichtung und dem Kommunikationsgerät aufgebaut werden. Das Extended-Access-Control (EAC) Authentifizierungsprotokoll kann beispielsweise gemäß der technischen Richtlinie BSI TR-03110 implementiert sein. Dadurch wird der Vorteil erreicht, dass ein etabliertes und standardisiertes asymmetrisches Authentifizierungsprotokoll verwendet werden kann.

Gemäß einer nicht erfindungsgemäßen Ausführungsform ist die Kommunikationsschnittstelle ausgebildet, mit der Zutrittskontrollvorrichtung ein symmetrisches Authentifizierungsprotokoll durchzuführen, wobei die Kommunikationsschnittstelle ausgebildet ist, das Bewegungsprofil an die Zutrittskontrollvorrichtung auszusenden, falls das mobile Kommunikationsgerät oder die Zutrittskontrollvorrichtung mittels des symmetrischen Authentifizierungsprotokolls authentifiziert ist. Dadurch wird der Vorteil erreicht, dass die Effizienz der kryptographischen Operationen erhöht werden kann.

Gemäß einer nicht erfindungsgemäßen Ausführungsform umfasst der Bewegungssensor einen Positionssensor, insbesondere einen GNSS-Empfänger, einen Geschwindigkeitssensor, einen Beschleunigungssensor, einen Magnetfeldsensor, einen Winkelgeschwindigkeitssensor oder einen Winkelbeschleunigungssensor. Dadurch wird der Vorteil erreicht, dass die Bewegung des mobilen Kommunikationsgerätes effizient erfasst werden kann.

Gemäß einer nicht erfindungsgemäßen Ausführungsform ist die Kommunikationsschnittstelle eine Bluetooth-Kommunikationsschnittstelle. Die Bluetooth-Kommunikationsschnittstelle kann beispielsweise gemäß dem Bluetooth-Standard Version 5.0 vom 6. Dezember 2016 implementiert sein. Dadurch wird der Vorteil erreicht, dass auf einen etablierten und standardisierten Kommunikationsstandard zurückgegriffen werden kann.

Gemäß einer nicht erfindungsgemäßen Ausführungsform ist das mobile Kommunikationsgerät ein Smartphone oder eine Smartwatch. Das mobile Kommunikationsgerät, insbesondere das Smartphone oder die Smartwatch, kann von dem Nutzer getragen werden. Dadurch wird der Vorteil erreicht, dass auf etablierte Architekturen für mobile Kommunikationsgeräte zurückgegriffen werden kann.

Die Erfindung nach Anspruch 1 betrifft eine Zutrittskontrollvorrichtung zum Kontrollieren eines Zutritts eines Nutzers zu einem Zutrittsbereich. Die Zutrittskontrollvorrichtung umfasst eine Kommunikationsschnittstelle, welche ausgebildet ist, ein Bewegungsprofil von einem mobilen Kommunikationsgerät zu empfangen, wobei das Bewegungsprofil eine erfasste Bewegung des mobilen Kommunikationsgerätes anzeigt, und einen Prozessor, welcher ausgebildet ist, das Bewegungsprofil mit einem vorbestimmten Bewegungsprofil zu vergleichen, ein Ähnlichkeitsmaß zwischen dem Bewegungsprofil und dem vorbestimmten Bewegungsprofil zu bestimmen, und den Zutritt zu dem Zutrittsbereich zu gewähren, falls das bestimmte Ähnlichkeitsmaß einen vorbestimmten Schwellwert überschreitet.

Ein hoher Wert des Ähnlichkeitsmaßes zeigt dabei eine hohe Übereinstimmung zwischen dem Bewegungsprofil und dem vorbestimmten Bewegungsprofil an, und ein geringer Wert des Ähnlichkeitsmaßes zeigt eine geringe Übereinstimmung zwischen dem Bewegungsprofil und dem vorbestimmten Bewegungsprofil an. Das Ähnlichkeitsmaß kann beispielsweise mittels einer Kreuzkorrelation, beispielsweise von Zeitverläufen, bestimmt werden.

Gemäß einer Ausführungsform ist die Kommunikationsschnittstelle ausgebildet, mit dem mobilen Kommunikationsgerät ein asymmetrisches Authentifizierungsprotokoll durchzuführen. Dadurch wird der Vorteil erreicht, dass die Schlüsselverwaltung vereinfacht und zugleich ein hohes Authentifizierungsniveau gewährleistet werden kann.

Gemäß einer Ausführungsform ist dem mobilen Kommunikationsgerät ein erstes kryptographisches Zertifikat zugeordnet, wobei der Zutrittskontrollvorrichtung ein zweites kryptographisches Zertifikat zugeordnet ist, und wobei die Kommunikationsschnittstelle ausgebildet ist, das asymmetrische Authentifizierungsprotokoll unter Verwendung des ersten kryptographischen Zertifikats und des zweiten kryptographischen Zertifikats durchzuführen. Dadurch wird der Vorteil erreicht, dass das asymmetrische Authentifizierungsprotokoll effizient durchgeführt werden kann.

Gemäß einer Ausführungsform umfasst das asymmetrische Authentifizierungsprotokoll ein Extended-Access-Control (EAC) Authentifizierungsprotokoll. Das Extended-Access-Control (EAC) Authentifizierungsprotokoll kann einen Protokollabschnitt zur Terminal Authentication (TA), einen Protokollabschnitt zur Passive Authentication (PA) und einen Protokollabschnitt zur Chip Authentication (CA) umfassen. Ferner kann im Rahmen des Extended-Access-Control (EAC) Authentifizierungsprotokolls ein Secure Messaging (SM) Kanal zwischen der Zutrittskontrollvorrichtung und dem Kommunikationsgerät aufgebaut werden. Das Extended-Access-Control (EAC) Authentifizierungsprotokoll kann beispielsweise gemäß der technischen Richtlinie BSI TR-03110 implementiert sein. Dadurch wird der Vorteil erreicht, dass ein etabliertes und standardisiertes asymmetrisches Authentifizierungsprotokoll verwendet werden kann.

Gemäß einer Ausführungsform ist die Kommunikationsschnittstelle ausgebildet, mit dem mobilen Kommunikationsgerät ein symmetrisches Authentifizierungsprotokoll durchzuführen. Dadurch wird der Vorteil erreicht, dass die Effizienz der kryptographischen Operationen erhöht werden kann.

Gemäß einer Ausführungsform ist der Prozessor ausgebildet, das vorbestimmte Bewegungsprofil aus einer Mehrzahl von vorbestimmten Bewegungsprofilen auszuwählen. Jedes vorbestimmte Bewegungsprofil der Mehrzahl von vorbestimmten Bewegungsprofilen kann beispielsweise einem jeweiligen mobilen Kommunikationsgerät zugeordnet sein. Dadurch wird der Vorteil erreicht, dass die Zutrittskontrollvorrichtung für eine Mehrzahl von mobilen Kommunikationsgeräten zur Zutrittskontrolle verwendet werden kann.

Gemäß einer Ausführungsform ist die Kommunikationsschnittstelle ausgebildet, die Mehrzahl von vorbestimmten Bewegungsprofilen über ein Kommunikationsnetzwerk von einem Server abzurufen. Dadurch wird der Vorteil erreicht, dass die Mehrzahl von Bewegungsprofilen durch den Server zentral gespeichert und verwaltet werden kann.

Gemäß der Erfindung umfasst die Zutrittskontrollvorrichtung eine Kamera, welche ausgebildet ist, eine Mehrzahl von Bildern des mobilen Kommunikationsgerätes zu erfassen, um eine Videosequenz zu erhalten, wobei der Prozessor ausgebildet ist, eine weitere Bewegung des mobilen Kommunikationsgerätes auf der Basis der Videosequenz zu bestimmen, aus der erfassten weiteren Bewegung des mobilen Kommunikationsgerätes ein weiteres Bewegungsprofil abzuleiten, wobei das weitere Bewegungsprofil die erfasste weitere Bewegung des Kommunikationsgerätes anzeigt, das weitere Bewegungsprofil mit dem vorbestimmten Bewegungsprofil zu vergleichen, ein weiteres Ähnlichkeitsmaß zwischen dem weiteren Bewegungsprofil und dem vorbestimmten Bewegungsprofil zu bestimmen, und den Zutritt zu dem Zutrittsbereich zu gewähren, falls das bestimmte weitere Ähnlichkeitsmaß den vorbestimmten Schwellwert überschreitet. Dadurch wird der Vorteil erreicht, dass ein weiteres Kriterium zum Gewähren des Zutritts zu dem Zutrittsbereich verwendet werden kann. Ferner kann gewährleistet werden, dass das Bewegungsprofil und das weitere Bewegungsprofil demselben mobilen Kommunikationsgerät zugeordnet sind.

Gemäß einer Ausführungsform ist die Kommunikationsschnittstelle eine Bluetooth-Kommunikationsschnittstelle. Die Bluetooth-Kommunikationsschnittstelle kann beispielsweise gemäß dem Bluetooth-Standard Version 5.0 vom 6. Dezember 2016 implementiert sein. Dadurch wird der Vorteil erreicht, dass auf einen etablierten und standardisierten Kommunikationsstandard zurückgegriffen werden kann.

Gemäß einem zweiten nach Anspruch 6 betrifft die Erfindung eine Anordnung zum Kontrollieren eines Zutritts eines Nutzers zu einem Zutrittsbereich. Die Anordnung umfasst ein mobiles Kommunikationsgerät gemäß dem ersten Aspekt der Erfindung, und eine Zutrittskontrollvorrichtung gemäß dem zweiten Aspekt der Erfindung.

Gemäß einer Ausführungsform umfasst die Anordnung eine Zutrittstür, welche an dem Zutrittsbereich angeordnet ist, wobei die Zutrittskontrollvorrichtung ausgebildet ist, ansprechend auf das Gewähren des Zutritts zu dem Zutrittsbereich, die Zutrittstür zu entriegeln. Dadurch wird der Vorteil erreicht, dass eine physische Zutrittskontrolle zu dem Zutrittsbereich effizient realisiert werden kann.

Gemäß einer Ausführungsform ist die Zutrittskontrollvorrichtung ausgebildet, ansprechend auf ein Verweigern des Zutritts zu dem Zutrittsbereich, die Zutrittstür zu verriegeln. Dadurch wird der Vorteil erreicht, dass eine physische Zutrittskontrolle zu dem Zutrittsbereich effizient realisiert werden kann.

Gemäß einem weiteren nicht erfindungsgemäßen Aspekt betrifft die Erfindung ein Verfahren zum Kommunizieren mit einer Zutrittskontrollvorrichtung unter Verwendung eines mobilen Kommunikationsgerätes, wobei das mobile Kommunikationsgerät einen Bewegungssensor, einen Prozessor und eine Kommunikationsschnittstelle umfasst. Das Verfahren umfasst ein Erfassen einer Bewegung des mobilen Kommunikationsgerätes durch den Bewegungssensor, ein Ableiten eines Bewegungsprofils aus der erfassten Bewegung des mobilen Kommunikationsgerätes durch den Prozessor, wobei das Bewegungsprofil die erfasste Bewegung des mobilen Kommunikationsgerätes anzeigt, und ein Aussenden des Bewegungsprofils an die Zutrittskontrollvorrichtung durch die Kommunikationsschnittstelle.

Das Verfahren kann durch das mobile Kommunikationsgerät durchgeführt werden. Weitere Merkmale des Verfahrens resultieren unmittelbar aus den Merkmalen und/oder der Funktionalität des mobilen Kommunikationsgerätes.

Gemäß einem weiteren Aspekt betrifft die Erfindung ein Verfahren zum Kontrollieren eines Zutritts eines Nutzers zu einem Zutrittsbereich unter Verwendung einer Zutrittskontrollvorrichtung, wobei die Zutrittskontrollvorrichtung eine Kommunikationsschnittstelle und einen Prozessor umfasst. Das Verfahren umfasst ein Empfangen eines Bewegungsprofils von einem mobilen Kommunikationsgerät durch die Kommunikationsschnittstelle, wobei das Bewegungsprofil eine erfasste Bewegung des mobilen Kommunikationsgerätes anzeigt, ein Vergleichen des Bewegungsprofils mit einem vorbestimmten Bewegungsprofil durch den Prozessor, ein Bestimmen eines Ähnlichkeitsmaßes zwischen dem Bewegungsprofil und dem vorbestimmten Bewegungsprofil durch den Prozessor, und ein Gewähren des Zutritts zu dem Zutrittsbereich durch den Prozessor, falls das bestimmte Ähnlichkeitsmaß einen vorbestimmten Schwellwert überschreitet.

Das Verfahren kann durch die Zutrittskontrollvorrichtung durchgeführt werden. Weitere Merkmale des Verfahrens resultieren unmittelbar aus den Merkmalen und/oder der Funktionalität der Zutrittskontrollvorrichtung.

Gemäß einem sechsten Aspekt betrifft die Erfindung ein Computerprogramm mit einem Programmcode zum Ausführen des Verfahrens gemäß Anspruch 8.

Die Zutrittskontrollvorrichtung können programmtechnisch eingerichtet sein, um den Programmcode oder Teile des Programmcodes auszuführen.

Die Erfindung kann in Hardware und/oder Software realisiert werden.

Weitere Ausführungsbeispiele werden Bezug nehmend auf die beiliegenden Zeichnungen näher erläutert. Es zeigen:
Fig. 1 ein schematisches Diagramm eines mobilen Kommunikationsgerätes zum Kommunizieren mit einer Zutrittskontrollvorrichtung;
Fig. 2 ein schematisches Diagramm einer Zutrittskontrollvorrichtung zum Kontrollieren eines Zutritts eines Nutzers zu einem Zutrittsbereich;
Fig. 3 ein schematisches Diagramm einer Anordnung zum Kontrollieren eines Zutritts eines Nutzers zu einem Zutrittsbereich;
Fig. 4 ein schematisches Diagramm eines Verfahrens zum Kommunizieren mit einer Zutrittskontrollvorrichtung;
Fig. 5 ein schematisches Diagramm eines Verfahrens zum Kontrollieren eines Zutritts eines Nutzers zu einem Zutrittsbereich; und
Fig. 6 ein schematisches Diagramm einer Anordnung zum Kontrollieren eines Zutritts eines Nutzers zu einem Zutrittsbereich.

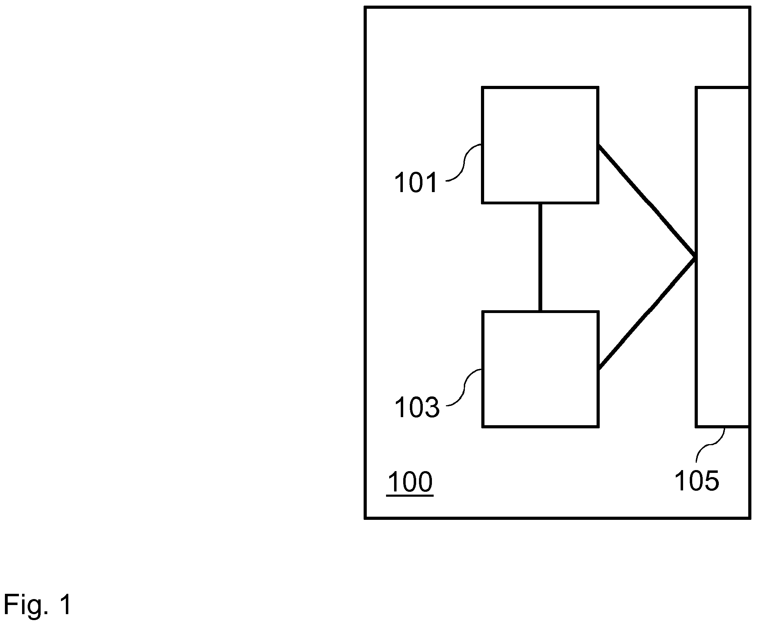

Fig. 1 zeigt ein schematisches Diagramm eines mobilen Kommunikationsgerätes 100 zum Kommunizieren mit einer Zutrittskontrollvorrichtung.

Das mobile Kommunikationsgerät 100 umfasst einen Bewegungssensor 101, welcher ausgebildet ist, eine Bewegung des mobilen Kommunikationsgerätes 100 zu erfassen, einen Prozessor 103, welcher ausgebildet ist, aus der erfassten Bewegung des mobilen Kommunikationsgerätes 100 ein Bewegungsprofil abzuleiten, wobei das Bewegungsprofil die erfasste Bewegung des mobilen Kommunikationsgerätes 100 anzeigt, und eine Kommunikationsschnittstelle 105, welche ausgebildet ist, das Bewegungsprofil an die Zutrittskontrollvorrichtung auszusenden.

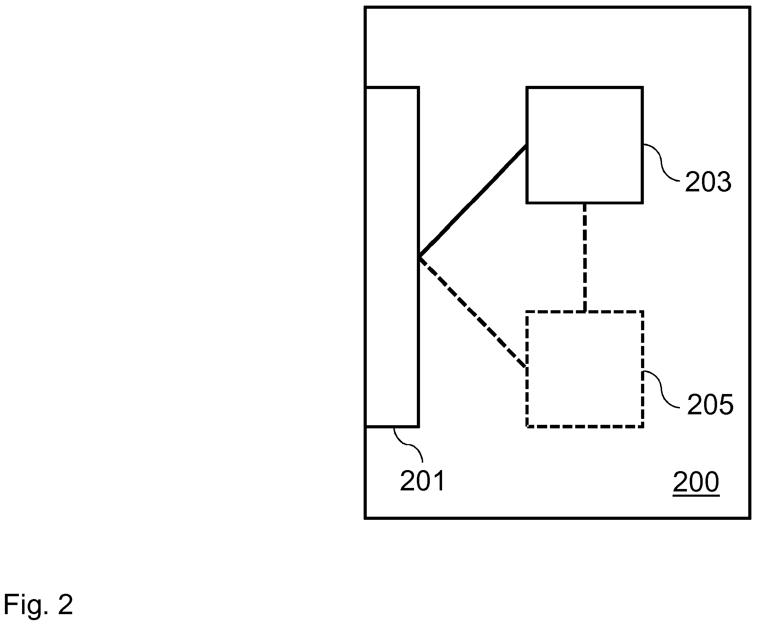

Fig. 2 zeigt ein schematisches Diagramm einer Zutrittskontrollvorrichtung 200 zum Kontrollieren eines Zutritts eines Nutzers zu einem Zutrittsbereich.

Die Zutrittskontrollvorrichtung 200 umfasst eine Kommunikationsschnittstelle 201, welche ausgebildet ist, ein Bewegungsprofil von einem mobilen Kommunikationsgerät zu empfangen, wobei das Bewegungsprofil eine erfasste Bewegung des mobilen Kommunikationsgerätes anzeigt, und einen Prozessor 203, welcher ausgebildet ist, das Bewegungsprofil mit einem vorbestimmten Bewegungsprofil zu vergleichen, ein Ähnlichkeitsmaß zwischen dem Bewegungsprofil und dem vorbestimmten Bewegungsprofil zu bestimmen, und den Zutritt zu dem Zutrittsbereich zu gewähren, falls das bestimmte Ähnlichkeitsmaß einen vorbestimmten Schwellwert überschreitet. Die Zutrittskontrollvorrichtung 200 umfasst ferner eine Kamera 205, welche ausgebildet ist, eine Mehrzahl von Bildern des mobilen Kommunikationsgerätes zu erfassen, um eine Videosequenz zu erhalten, wobei der Prozessor 203 ausgebildet ist, eine weitere Bewegung des mobilen Kommunikationsgerätes auf der Basis der Videosequenz zu bestimmen, aus der erfassten weiteren Bewegung des mobilen Kommunikationsgerätes ein weiteres Bewegungsprofil abzuleiten, wobei das weitere Bewegungsprofil die erfasste weitere Bewegung des Kommunikationsgerätes anzeigt, das weitere Bewegungsprofil mit dem vorbestimmten Bewegungsprofil zu vergleichen, ein weiteres Ähnlichkeitsmaß zwischen dem weiteren Bewegungsprofil und dem vorbestimmten Bewegungsprofil zu bestimmen, und den Zutritt zu dem Zutrittsbereich zu gewähren, falls das bestimmte weitere Ähnlichkeitsmaß den vorbestimmten Schwellwert überschreitet.

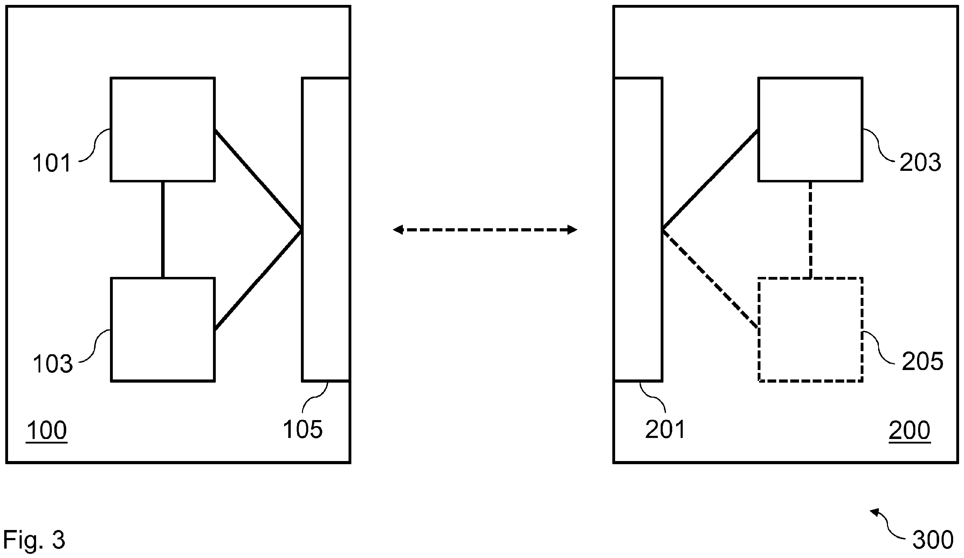

Fig. 3 zeigt ein schematisches Diagramm einer Anordnung 300 zum Kontrollieren eines Zutritts eines Nutzers zu einem Zutrittsbereich. Die Anordnung 300 umfasst ein mobiles Kommunikationsgerät 100 und eine Zutrittskontrollvorrichtung 200.

Das mobile Kommunikationsgerät 100 umfasst einen Bewegungssensor 101, welcher ausgebildet ist, eine Bewegung des mobilen Kommunikationsgerätes 100 zu erfassen, einen Prozessor 103, welcher ausgebildet ist, aus der erfassten Bewegung des mobilen Kommunikationsgerätes 100 ein Bewegungsprofil abzuleiten, wobei das Bewegungsprofil die erfasste Bewegung des mobilen Kommunikationsgerätes 100 anzeigt, und eine Kommunikationsschnittstelle 105, welche ausgebildet ist, das Bewegungsprofil an die Zutrittskontrollvorrichtung 200 auszusenden.

Die Zutrittskontrollvorrichtung 200 umfasst eine Kommunikationsschnittstelle 201, welche ausgebildet ist, das Bewegungsprofil von dem mobilen Kommunikationsgerät 100 zu empfangen, wobei das Bewegungsprofil eine erfasste Bewegung des mobilen Kommunikationsgerätes 100 anzeigt, und einen Prozessor 203, welcher ausgebildet ist, das Bewegungsprofil mit einem vorbestimmten Bewegungsprofil zu vergleichen, ein Ähnlichkeitsmaß zwischen dem Bewegungsprofil und dem vorbestimmten Bewegungsprofil zu bestimmen, und den Zutritt zu dem Zutrittsbereich zu gewähren, falls das bestimmte Ähnlichkeitsmaß einen vorbestimmten Schwellwert überschreitet. Die Zutrittskontrollvorrichtung 200 umfasst ferner eine Kamera 205, welche ausgebildet ist, eine Mehrzahl von Bildern des mobilen Kommunikationsgerätes 100 zu erfassen, um eine Videosequenz zu erhalten, wobei der Prozessor 203 ausgebildet ist, eine weitere Bewegung des mobilen Kommunikationsgerätes 100 auf der Basis der Videosequenz zu bestimmen, aus der erfassten weiteren Bewegung des mobilen Kommunikationsgerätes 100 ein weiteres Bewegungsprofil abzuleiten, wobei das weitere Bewegungsprofil die erfasste weitere Bewegung des Kommunikationsgerätes 100 anzeigt, das weitere Bewegungsprofil mit dem vorbestimmten Bewegungsprofil zu vergleichen, ein weiteres Ähnlichkeitsmaß zwischen dem weiteren Bewegungsprofil und dem vorbestimmten Bewegungsprofil zu bestimmen, und den Zutritt zu dem Zutrittsbereich zu gewähren, falls das bestimmte weitere Ähnlichkeitsmaß den vorbestimmten Schwellwert überschreitet.

Das mobile Kommunikationsgerät 100 schafft somit die Möglichkeit, als Zutrittstoken für eine physische Zutrittskontrolle verwendet zu werden. Das mobile Kommunikationsgerät 100 kann beispielsweise mit bestehenden Zutrittskontrollsystemen interagieren bzw. deren Funktionalität erweitern. Zur Zutrittskontrolle kann als Faktor folglich eine Verhaltens-basierte Identität des Nutzers ausgewertet werden. Als weiterer Faktor kann beispielsweise ein asymmetrisches Authentifizierungsprotokoll durchgeführt werden. Insbesondere kann ein sicherer Austausch bzw. ein Nachweis eines kryptografischen Schlüssels durch das mobile Kommunikationsgerät 100 erfolgen, wobei dieser in einem sicheren Speicherbereich eines Speichers des mobilen Kommunikationsgerätes 100, beispielsweise einem Secure Element, gespeichert werden kann.

Zur Verhaltens-basierten Identifikation des Nutzers können verschiedene Ansätze zum Einsatz kommen.

Ein erster Ansatz kann beispielsweise darin bestehen, dass der Nutzer, während er vor der Zutrittstür steht, mit dem mobilen Kommunikationsgerät 100 in der Hand eine vorab festgelegte, bestimmte Geste als Bewegung vollführt. Der Bewegungssensor 101, welcher beispielsweise einen Geschwindigkeitssensor oder einen Beschleunigungssensor umfassen kann, erfasst die Bewegung. Der Prozessor 103 analysiert die Bewegung und leitet hieraus ein Bewegungsprofil ab, welches mittels der Kommunikationsschnittstelle 105 an die Zutrittskontrollvorrichtung 200 übertragen wird. Diese vergleicht das Bewegungsprofil mit dem vorbestimmten Bewegungsprofil, beispielsweise einer antrainierten Geste des Nutzers. Überschreitet das Ähnlichkeitsmaß, welches eine Übereinstimmung zwischen dem Bewegungsprofil und dem vorbestimmten Bewegungsprofil anzeigt, einen vorbestimmten Schwellwert, gilt der Nutzer als erfolgreich authentifiziert und die Zutrittstür kann entriegelt bzw. geöffnet werden. Ferner kann eine Verifikation weiterer Faktoren vor dem Entriegeln bzw. Öffnen der Zutrittstür durchgeführt werden. Dieser Ansatz kann als Auswertung eines biometrischen Merkmals des Nutzers angesehen werden, welches aktiv durch den Nutzer durchgeführt bzw. initiiert wird. Der Nutzer gibt beispielsweise seine explizite Einwilligung, die Zutrittstür zu entriegeln bzw. zu öffnen.

Ein zweiter Ansatz kann beispielsweise darin bestehen, dass das mobile Kommunikationsgerät 100 permanent im Hintergrund Informationen bzw. Daten über ein typisches Verhalten des Nutzers erfasst bzw. aufzeichnet. Beispielsweise können Gangmuster oder Laufmuster des Nutzers durch den Bewegungssensor 101 des mobilen Kommunikationsgerätes 100 erfasst werden. Ferner kann eine Umgebung des Nutzers in Form vorhandener Netzwerke, beispielsweise mittels WLAN oder Bluetooth, erfasst werden. Gemäß einer Ausführungsform repräsentiert das Ähnlichkeitsmaß eine Wahrscheinlichkeit dafür, dass der Nutzer das mobile Kommunikationsgerät 100 mit sich führt. Dabei können ferner historisch erfasste bzw. aufgezeichnete Informationen bzw. Daten verarbeitet werden.

Ein dritter Ansatz kann beispielsweise darin bestehen, den ersten Ansatz mit dem zweiten Ansatz zu kombinieren. Beispielsweise können sowohl eine antrainierte Geste als auch ein Gangmuster oder Laufmuster des Nutzers durch den Prozessor 103 ausgewertet werden.

Das mobile Kommunikationsgerät 100 kann beispielsweise ein Smartphone oder eine Smartwatch sein. Gemäß einer Ausführungsform bilden ein Smartphone und eine Smartwatch gemeinsam das mobile Kommunikationsgerät 100, wobei das Smartphone mit der Smartwatch gekoppelt ist. Die Kommunikation zwischen dem Smartphone und der Smartwatch kann über kontaktlose Kommunikationsschnittstellen, beispielsweise mittels Bluetooth, erfolgen.

In Smartphones, welche als Zugangstoken eingesetzt werden, können entsprechende Sensoren für biometrische Merkmale bzw. Faktoren bereits vorhanden sein. Durch eine Kombination des ersten Ansatzes mit dem dritten Ansatz kann insbesondere eine explizite Einwilligung des Nutzers zum Entriegeln der Zutrittstür bei gleichzeitig hoher Reichweite der Kommunikationsschnittstellen gewährleistet werden. Ferner kann dadurch verhindert werden, dass Dritte beim Vorbeigehen an der Zutrittstür, diese ebenfalls öffnen.

Folglich kann eine Verhaltens-basierte Identifikation des Nutzers durch das mobile Kommunikationsgerät 100 als Faktor für die Zutrittskontrolle benutzt werden. Gemäß einer Ausführungsform führt das mobile Kommunikationsgerät 100 mittels Bluetooth ein Schlüsselbasiertes Authentifizierungsprotokoll mit der Zutrittskontrollvorrichtung 200 bzw. einem Türcontroller durch. Ferner vollführt der Nutzer eine antrainierte Geste vor der Zutrittstür, um diese aktiv zu entriegeln bzw. zu öffnen.

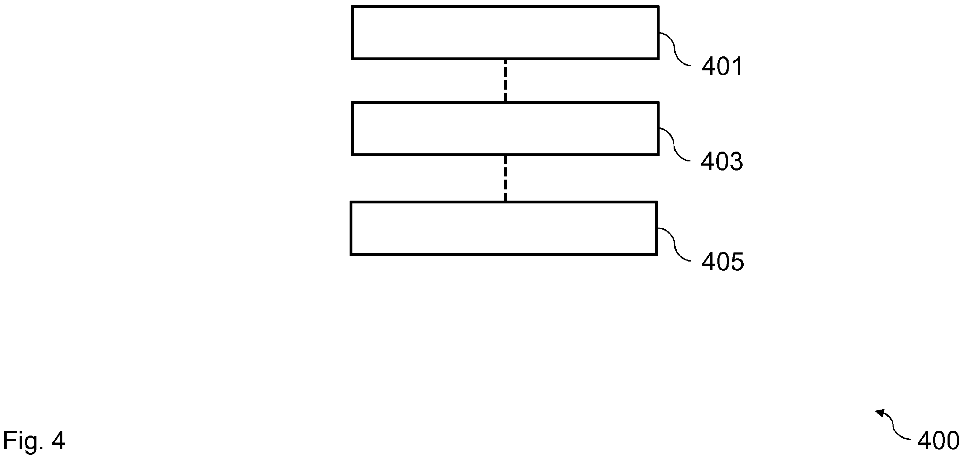

Fig. 4 zeigt ein schematisches Diagramm eines Verfahrens 400 zum Kommunizieren mit einer Zutrittskontrollvorrichtung unter Verwendung eines mobilen Kommunikationsgerätes, wobei das mobile Kommunikationsgerät einen Bewegungssensor, einen Prozessor und eine Kommunikationsschnittstelle umfasst.

Das Verfahren 400 umfasst ein Erfassen 401 einer Bewegung des mobilen Kommunikationsgerätes durch den Bewegungssensor, ein Ableiten 403 eines Bewegungsprofils aus der erfassten Bewegung des mobilen Kommunikationsgerätes durch den Prozessor, wobei das Bewegungsprofil die erfasste Bewegung des mobilen Kommunikationsgerätes anzeigt, und ein Aussenden 405 des Bewegungsprofils an die Zutrittskontrollvorrichtung durch die Kommunikationsschnittstelle.

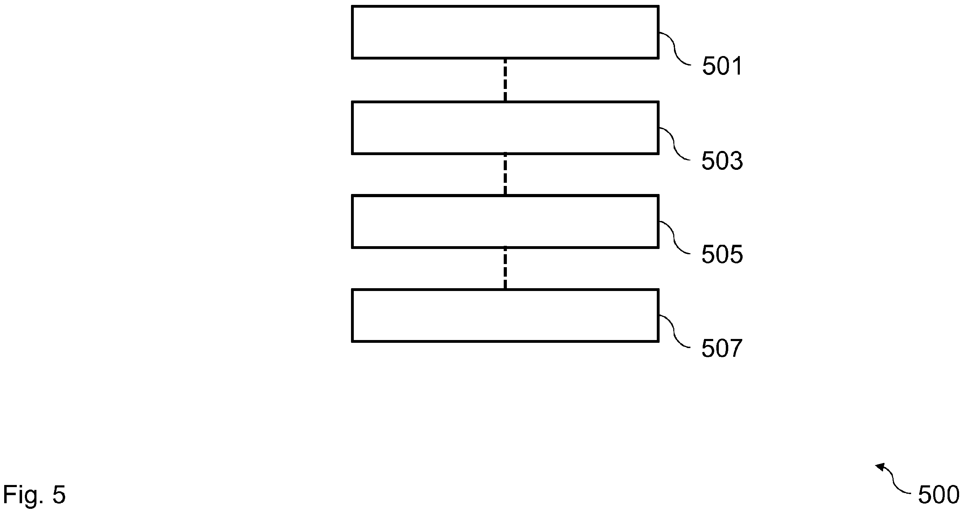

Fig. 5 zeigt ein schematisches Diagramm eines Verfahrens 500 zum Kontrollieren eines Zutritts eines Nutzers zu einem Zutrittsbereich unter Verwendung einer Zutrittskontrollvorrichtung, wobei die Zutrittskontrollvorrichtung eine Kommunikationsschnittstelle und einen Prozessor umfasst.

Das Verfahren 500 umfasst ein Empfangen 501 eines Bewegungsprofils von einem mobilen Kommunikationsgerät durch die Kommunikationsschnittstelle, wobei das Bewegungsprofil eine erfasste Bewegung des mobilen Kommunikationsgerätes anzeigt, ein Vergleichen 503 des Bewegungsprofils mit einem vorbestimmten Bewegungsprofil durch den Prozessor, ein Bestimmen 505 eines Ähnlichkeitsmaßes zwischen dem Bewegungsprofil und dem vorbestimmten Bewegungsprofil durch den Prozessor, und ein Gewähren 507 des Zutritts zu dem Zutrittsbereich durch den Prozessor, falls das bestimmte Ähnlichkeitsmaß einen vorbestimmten Schwellwert überschreitet.

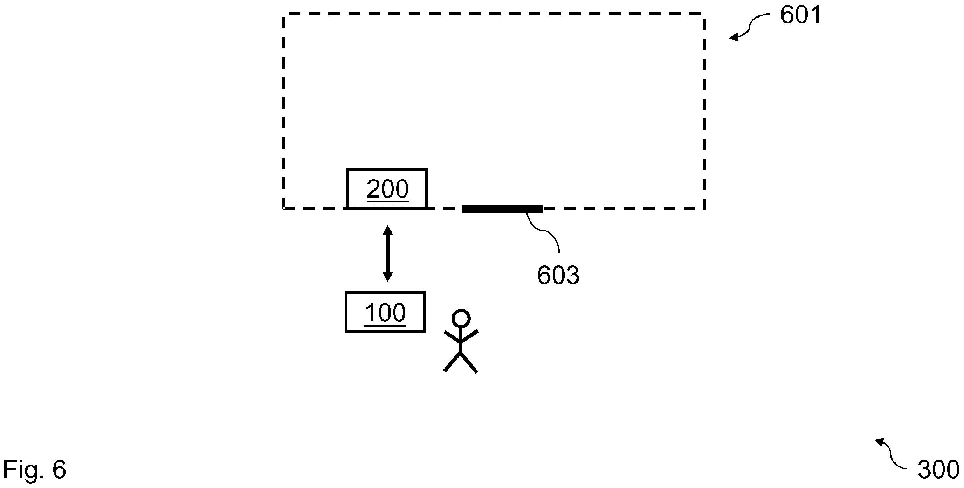

Fig. 6 zeigt ein schematisches Diagramm einer Anordnung 300 zum Kontrollieren eines Zutritts eines Nutzers zu einem Zutrittsbereich 601. Die Anordnung 300 umfasst ein mobiles Kommunikationsgerät 100, eine Zutrittskontrollvorrichtung 200 und eine Zutrittstür 603, welche an dem Zutrittsbereich 601 angeordnet ist. Die Zutrittskontrollvorrichtung 200 ist ausgebildet, ansprechend auf das Gewähren des Zutritts zu dem Zutrittsbereich 601, die Zutrittstür 603 zu entriegeln.

Einem Nutzer, welcher das mobile Kommunikationsgerät 100 mit sich führt, kann der Zutritt zu dem Zutrittsbereich 601 durch die Zutrittskontrollvorrichtung 200 gewährt oder verweigert werden. Das Kommunikationsgerät 100 kann beispielsweise ein Smartphone sein, welches der Nutzer mit sich führt, oder eine Smartwatch, welche der Nutzer an einem Arm trägt.

Alle in Verbindung mit einzelnen Ausführungsformen beschriebenen oder gezeigten Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Mobiles Kommunikationsgerät
- 101: Bewegungssensor
- 103: Prozessor
- 105: Kommunikationsschnittstelle

- 200: Zutrittskontrollvorrichtung
- 201: Kommunikationsschnittstelle
- 203: Prozessor
- 205: Kamera

- 300: Anordnung

- 400: Verfahren zum Kommunizieren mit einer Zutrittskontrollvorrichtung
- 401: Erfassen einer Bewegung des mobilen Kommunikationsgerätes
- 403: Ableiten eines Bewegungsprofils
- 405: Aussenden des Bewegungsprofils

- 500: Verfahren zum Kontrollieren eines Zutritts eines Nutzers
- 501: Empfangen eines Bewegungsprofils
- 503: Vergleichen des Bewegungsprofils
- 505: Bestimmen eines Ähnlichkeitsmaßes
- 507: Gewähren des Zutritts zu dem Zutrittsbereich

- 601: Zutrittsbereich
- 603: Zutrittstür

## Patentansprüche

1. Zutrittskontrollvorrichtung (200) zum Kontrollieren eines Zutritts eines Nutzers zu einem Zutrittsbereich (601), mit:
einer Kommunikationsschnittstelle (201), welche ausgebildet ist, ein Bewegungsprofil von einem mobilen Kommunikationsgerät (100) zu empfangen, wobei das Bewegungsprofil eine erfasste Bewegung des mobilen Kommunikationsgerätes (100) anzeigt;
einem Prozessor (203), welcher ausgebildet ist, das Bewegungsprofil mit einem vorbestimmten Bewegungsprofil zu vergleichen, ein Ähnlichkeitsmaß zwischen dem Bewegungsprofil und dem vorbestimmten Bewegungsprofil zu bestimmen, und den Zutritt zu dem Zutrittsbereich (601) zu gewähren, falls das bestimmte Ähnlichkeitsmaß einen vorbestimmten Schwellwert überschreitet; und
einer Kamera (205), welche ausgebildet ist, eine Mehrzahl von Bildern des mobilen Kommunikationsgerätes (100) zu erfassen, um eine Videosequenz zu erhalten;
wobei der Prozessor (203) ausgebildet ist, eine weitere Bewegung des mobilen Kommunikationsgerätes (100) auf der Basis der Videosequenz zu bestimmen, aus der erfassten weiteren Bewegung des mobilen Kommunikationsgerätes (100) ein weiteres Bewegungsprofil abzuleiten, wobei das weitere Bewegungsprofil die erfasste weitere Bewegung des Kommunikationsgerätes (100) anzeigt, das weitere Bewegungsprofil mit dem vorbestimmten Bewegungsprofil zu vergleichen, ein weiteres Ähnlichkeitsmaß zwischen dem weiteren Bewegungsprofil und dem vorbestimmten Bewegungsprofil zu bestimmen, und den Zutritt zu dem Zutrittsbereich (601) zu gewähren, falls das bestimmte weitere Ähnlichkeitsmaß den vorbestimmten Schwellwert überschreitet.

2. Zutrittskontrollvorrichtung (200) nach Anspruch 1, wobei die Kommunikationsschnittstelle (201) ausgebildet ist, mit dem mobilen Kommunikationsgerät (100) ein asymmetrisches Authentifizierungsprotokoll durchzuführen.

3. Zutrittskontrollvorrichtung (200) nach Anspruch 2, wobei das asymmetrische Authentifizierungsprotokoll ein Extended-Access-Control (EAC) Authentifizierungsprotokoll umfasst.

4. Zutrittskontrollvorrichtung (200) nach einem der Ansprüche 1 bis 3, wobei der Prozessor (203) ausgebildet ist, das vorbestimmte Bewegungsprofil aus einer Mehrzahl von vorbestimmten Bewegungsprofilen auszuwählen.

5. Zutrittskontrollvorrichtung (200) nach Anspruch 4, wobei die Kommunikationsschnittstelle (201) ausgebildet ist, die Mehrzahl von vorbestimmten Bewegungsprofilen über ein Kommunikationsnetzwerk von einem Server abzurufen.

6. Anordnung (300) zum Kontrollieren eines Zutritts eines Nutzers zu einem Zutrittsbereich (601), mit:
einem mobilen Kommunikationsgerät (100); und
einer Zutrittskontrollvorrichtung (200) nach einem der Ansprüche 1 bis 5;
wobei das mobile Kommunikationsgerät (100) folgendes umfasst:
einen Bewegungssensor (101), welcher ausgebildet ist, eine Bewegung des mobilen Kommunikationsgerätes (100) zu erfassen;
einen Prozessor (103), welcher ausgebildet ist, aus der erfassten Bewegung des mobilen Kommunikationsgerätes (100) ein Bewegungsprofil abzuleiten, wobei das Bewegungsprofil die erfasste Bewegung des mobilen Kommunikationsgerätes (100) anzeigt; und
eine Kommunikationsschnittstelle (105), welche ausgebildet ist, das Bewegungsprofil an die Zutrittskontrollvorrichtung (200) auszusenden.

7. Anordnung (300) nach Anspruch 6, mit:
einer Zutrittstür (603), welche an dem Zutrittsbereich (601) angeordnet ist;
wobei die Zutrittskontrollvorrichtung (200) ausgebildet ist, ansprechend auf das Gewähren des Zutritts zu dem Zutrittsbereich (601), die Zutrittstür (603) zu entriegeln.

8. Verfahren (500) zum Kontrollieren eines Zutritts eines Nutzers zu einem Zutrittsbereich (601) unter Verwendung einer Zutrittskontrollvorrichtung (200), wobei die Zutrittskontrollvorrichtung (200) eine Kommunikationsschnittstelle (201), einen Prozessor (203) und eine Kamera (205) umfasst, mit:
Empfangen (501) eines Bewegungsprofils von einem mobilen Kommunikationsgerät (100) durch die Kommunikationsschnittstelle (201), wobei das Bewegungsprofil eine erfasste Bewegung des mobilen Kommunikationsgerätes (100) anzeigt;
Vergleichen (503) des Bewegungsprofils mit einem vorbestimmten Bewegungsprofil durch den Prozessor (203);
Bestimmen (505) eines Ähnlichkeitsmaßes zwischen dem Bewegungsprofil und dem vorbestimmten Bewegungsprofil durch den Prozessor (203);
Gewähren (507) des Zutritts zu dem Zutrittsbereich (601) durch den Prozessor (203), falls das bestimmte Ähnlichkeitsmaß einen vorbestimmten Schwellwert überschreitet;
Erfassen einer Mehrzahl von Bildern des mobilen Kommunikationsgerätes (100) durch die Kamera (205), um eine Videosequenz zu erhalten;
Bestimmen einer weiteren Bewegung des mobilen Kommunikationsgerätes (100) auf der Basis der Videosequenz durch den Prozessor (203),
Ableiten aus der erfassten weiteren Bewegung des mobilen Kommunikationsgerätes (100) eines weiteren Bewegungsprofils durch den Prozessor (203), wobei das weitere Bewegungsprofil die erfasste weitere Bewegung des Kommunikationsgerätes (100) anzeigt,
Vergleichen des weiteren Bewegungsprofils mit dem vorbestimmten Bewegungsprofil durch den Prozessor (203),
Bestimmen eines weiteren Ähnlichkeitsmaßes zwischen dem weiteren Bewegungsprofil und dem vorbestimmten Bewegungsprofil durch den Prozessor (203), und
Gewähren des Zutritts zu dem Zutrittsbereich (601) durch den Prozessor (203), falls das bestimmte weitere Ähnlichkeitsmaß den vorbestimmten Schwellwert überschreitet.

9. Computerprogramm mit einem Programmcode zum Ausführen des Verfahrens (500) nach Anspruch 8.

## Claims

1. An access control device (200) for controlling an access of a user to an access area (601), the access control device (200) comprising:
a communication interface (201) which is configured to receive a movement profile from a mobile communication device (100), wherein the movement profile indicates a detected movement of the mobile communication device (100);
a processor (203) which is configured to compare the movement profile with a predetermined movement profile, to determine a similarity measure between the movement profile and the predetermined movement profile, and to grant the access to the access area (601) if the determined similarity measure exceeds a predetermined threshold value; and
a camera (205) which is configured to capture a plurality of images of the mobile communication device (100) in order to obtain a video sequence;
wherein the processor (203) is configured to determine a further movement of the mobile communication device (100) on the basis of the video sequence, to derive a further movement profile from the detected further movement of the mobile communication device (100), wherein the further movement profile indicates the detected further movement of the communication device (100), to compare the further movement profile with the predetermined movement profile, to determine a further similarity measure between the further movement profile and the predetermined movement profile, and to grant the access to the access area (601) if the determined further similarity measure exceeds the predetermined threshold value.

2. The access control device (200) according to claim 1, wherein the communication interface (201) is configured to carry out an asymmetrical authentication protocol with the mobile communication device (100).

3. The access control device (200) according to claim 2, wherein the asymmetric authentication protocol comprises an Extended-Access-Control (EAC) authentication protocol.

4. The access control device (200) according to any one of claims 1 to 3, wherein the processor (203) is configured to select the predetermined movement profile from a plurality of predetermined movement profiles.

5. The access control device (200) according to claim 4, wherein the communication interface (201) is configured to retrieve the plurality of predetermined movement profiles from a server via a communication network.

6. An arrangement (300) for controlling an access of a user to an access area (601), the arrangement (300) comprising:
a mobile communication device (100); and
an access control device (200) according to any one of claims 1 to 5;
wherein the mobile communication device (100) comprises:
a movement sensor (101) which is configured to detect a movement of the mobile communication device (100);
a processor (103) which is configured to derive a movement profile from the detected movement of the mobile communication device (100), wherein the movement profile indicates the detected movement of the mobile communication device (100); and
a communication interface (105) which is configured to send out the movement profile to the access control device (200).

7. The arrangement (300) according to claim 6, comprising:
an access door (603) which is arranged on the access area (601);
wherein the access control device (200) is configured to unlock the access door (603) in response to granting the access to the access area (601).

8. A method (500) for controlling an access of a user to an access area (601) using an access control device (200), wherein the access control device (200) comprises a communication interface (201), a processor (203) and a camera (205), the method (500) comprising:
receiving (501) a movement profile from a mobile communication device (100) through the communication interface (201), wherein the movement profile indicates a detected movement of the mobile communication device (100);
comparing (503) the movement profile with a predetermined movement profile by the processor (203);
determining (505) a similarity measure between the movement profile and the predetermined movement profile by the processor (203);
granting (507) the access to the access area (601) by the processor (203) if the determined similarity measure exceeds a predetermined threshold value;
capturing a plurality of images of the mobile communication device (100) by the camera (205) in order to obtain a video sequence;
determining a further movement of the mobile communication device (100) on the basis of the video sequence by the processor (203),
deriving a further movement profile from the detected further movement of the mobile communication device (100) by the processor (203), wherein the further movement profile indicates the detected further movement of the communication device (100),
comparing the further movement profile with the predetermined movement profile by the processor (203),
determining a further similarity measure between the further movement profile and the predetermined movement profile by the processor (203), and
granting the access to the access area (601) by the processor (203) if the determined further similarity measure exceeds the predetermined threshold value.

9. A computer program comprising a program code for carrying out the method (500) according to claim 8.

## Revendications

1. Dispositif de contrôle d'accès (200) permettant de contrôler un accès d'un utilisateur à une zone d'accès (601), comprenant :
une interface de communication (201) qui est réalisée pour recevoir d'un appareil de communication mobile (100) un profil de mouvement, le profil de mouvement affichant un mouvement détecté de l'appareil de communication mobile (100) ;
un processeur (203) qui est réalisé pour comparer le profil de mouvement avec un profil de mouvement prédéterminé, pour déterminer un degré de similitude entre le profil de mouvement et le profil de mouvement prédéterminé, et pour autoriser l'accès à la zone d'accès (601) si le degré de similitude déterminé dépasse une valeur seuil prédéterminée ; et
une caméra (205) qui est réalisée pour détecter une pluralité d'images de l'appareil de communication mobile (100) pour obtenir une séquence vidéo ;
le processeur (203) étant réalisé pour déterminer un autre mouvement de l'appareil de communication mobile (100) sur la base de la séquence vidéo, pour dériver un autre profil de mouvement à partir de l'autre mouvement détecté de l'appareil de communication mobile (100), l'autre profil de mouvement affichant l'autre mouvement détecté de l'appareil de communication (100), pour comparer l'autre profil de mouvement avec le profil de mouvement prédéterminé, pour déterminer un autre degré de similitude entre l'autre profil de mouvement et le profil de mouvement prédéterminé, et pour autoriser l'accès à la zone d'accès (601) si l'autre degré de similitude déterminé dépasse la valeur seuil prédéterminée.

2. Dispositif de contrôle d'accès (200) selon la revendication 1, dans lequel l'interface de communication (201) est réalisée pour effectuer un protocole d'authentification asymétrique avec l'appareil de communication mobile (100).

3. Dispositif de contrôle d'accès (200) selon la revendication 2, dans lequel le protocole d'authentification asymétrique comprend un protocole d'authentification à contrôle d'accès étendu (EAC).

4. Dispositif de contrôle d'accès (200) selon l'une quelconque des revendications 1 à 3, dans lequel le processeur (203) est réalisé pour sélectionner le profil de mouvement prédéterminé parmi une pluralité de profils de mouvement prédéterminés.

5. Dispositif de contrôle d'accès (200) selon la revendication 4, dans lequel l'interface de communication (201) est réalisée pour extraire d'un serveur la pluralité de profils de mouvement prédéterminés par un réseau de communication.

6. Agencement (300) permettant de contrôler un accès d'un utilisateur à une zone d'accès (601), comprenant :
un appareil de communication mobile (100) ; et
un dispositif de contrôle d'accès (200) selon l'une quelconque des revendications 1 à 5 ;
l'appareil de communication mobile (100) comprenant les éléments suivants :
un capteur de mouvement (101) qui est réalisé pour détecter un mouvement de l'appareil de communication mobile (100) ;
un processeur (103) qui est réalisé pour dériver un profil de mouvement à partir du mouvement détecté de l'appareil de communication mobile (100), le profil de mouvement affichant le mouvement détecté de l'appareil de communication mobile (100) ; et
une interface de communication (105) qui est réalisée pour envoyer le profil de mouvement au dispositif de contrôle d'accès (200).

7. Agencement (300) selon la revendication 6, comprenant :
une porte d'accès (603) qui est disposée au niveau de la zone d'accès (601) ;
le dispositif de contrôle d'accès (200) étant réalisé pour déverrouiller la porte d'accès (603) en réponse à l'autorisation de l'accès à la zone d'accès (601) .

8. Procédé (500) permettant de contrôler un accès d'un utilisateur à une zone d'accès (601) en utilisant un dispositif de contrôle d'accès (200), le dispositif de contrôle d'accès (200) comprenant une interface de communication (201), un processeur (203) et une caméra (205), comprenant les étapes consistant à :
recevoir (501) un profil de mouvement d'un appareil de communication mobile (100) par l'interface de communication (201), le profil de mouvement affichant un mouvement détecté de l'appareil de communication mobile (100) ;
comparer (503) le profil de mouvement avec un profil de mouvement prédéterminé, par le processeur (203) ;
déterminer (505) un degré de similitude entre le profil de mouvement et le profil de mouvement prédéterminé, par le processeur (203) ;
autoriser (507) l'accès à la zone d'accès (601), par le processeur (203), si le degré de similitude déterminé dépasse une valeur seuil prédéterminée ;
détecter une pluralité d'images de l'appareil de communication mobile (100) par la caméra (205) pour obtenir une séquence vidéo ;
déterminer un autre mouvement de l'appareil de communication mobile (100) sur la base de la séquence vidéo, par le processeur (203),
dériver un autre profil de mouvement à partir de l'autre mouvement détecté de l'appareil de communication mobile (100), par le processeur (203), l'autre profil de mouvement affichant l'autre mouvement détecté de l'appareil de communication (100),
comparer l'autre profil de mouvement avec le profil de mouvement prédéterminé, par le processeur (203),
déterminer un autre degré de similitude entre l'autre profil de mouvement et le profil de mouvement prédéterminé, par le processeur (203), et
autoriser l'accès à la zone d'accès (601), par le processeur (203), si l'autre degré de similitude déterminé dépasse la valeur seuil prédéterminée.

9. Programme informatique comprenant du code programme pour exécuter le procédé (500) selon la revendication 8.
